# EUROPÄISCHE PATENTANMELDUNG

(11) **EP 3 965 248 A1**
(43) Veröffentlichungstag der Anmeldung: **09.03.2022**
(21) Anmeldenummer: 20194111.9
(22) Anmeldetag: 02.09.2020
(51) Int. Cl.: H02J 3/18, H02J 3/30

(54) **ANORDNUNG UND VERFAHREN ZUM STABILISIEREN EINES WECHSELSPANNUNGSNETZES**

(71) Anmelder: Siemens Energy Global GmbH & Co. KG, 81739 München (DE)
(72) Erfinder: Haselbauer, Andreas, 91058 Erlangen (DE); Hellfritzsch, Björn, 90768 Fürth (DE); Morgenstern, Ralph, 91052 Erlangen (DE); Naukamm, Markus, 91052 Erlangen (DE)

(57) **Zusammenfassung**

Die Erfindung betrifft eine Anordnung (1) zum Stabilisieren eines Wechselspannungsnetzes (2) mit einem rotierenden Phasenschieber (14), der zum Austausch von Blindleistung mit dem Wechselspannungsnetz eingerichtet ist. Die Erfindung zeichnet sich durch einen Umrichter (12) mit einer Netzseite zum Verbinden mit dem Wechselspannungsnetz und einer Maschinenseite zum Verbinden mit dem Phasenschieber aus. Die Erfindung betrifft ferner ein Verfahren zum Stabilisieren eines Wechselspannungsnetzes mittels der erfindungsgemäßen Anordnung.

## Beschreibung

Die Erfindung betrifft eine Anordnung zum Stabilisieren eines Wechselspannungsnetzes mit einem rotierenden Phasenschieber, der zum Austausch von Blindleistung mit dem Wechselspannungsnetz eingerichtet ist.

Rotierende Phasenschieber sind rotierende elektrische Maschinen, deren Rotationsenergie entsprechend ihrer hohen Schwungmasse zur Netzstabilisierung einsetzbar ist. Ein parallel zum Wechselspannungsnetz geschalteter, rotierender Phasenschieber kann ferner zur Bereitstellung von Kurzschlussleistung dienen sowie in Störungsfällen zur Bereitstellung von Blindleistung zur Spannungswiederkehr. Mit dem steigenden Anteil erneuerbarer Energien gewinnen diese Funktionalitäten immer mehr an Bedeutung.

Heute meist eingesetzte Phasenschieber arbeiten gekoppelt an eine feste Nennfrequenz des Wechselspannungsnetzes (z.B. 50Hz oder 60Hz), sind jedoch dazu eingerichtet, auch bei einer Frequenzänderung (insbesondere Frequenzabfall) im Netz eine Leistung mit dem Netz auszutauschen. Phasenschieber können ihre kinetische Energie üblicherweise nur bis zu einer unteren Grenzfrequenz bereitstellen. Die Grenzfrequenz liegt bei ca. 47 Hz oder 48 Hz bzw. im Allgemeinen zwischen 46 Hz und 49 Hz. Wird dieses unterschritten, erfolgt eine Abschaltung und Trennung des Phasenschiebers vom Netz.

Die Aufgabe der Erfindung besteht darin, eine Anordnung der obigen Art vorzuschlagen, die eine verbesserte Stabilisierung des Wechselspannungsnetzes ermöglicht.

Die Aufgabe wird erfindungsgemäß bei einer artgemäßen Anordnung durch einen Umrichter mit einer Netzseite (bzw. mit einer netzseitigen Umrichterbrücke) zum Verbinden mit dem Wechselspannungsnetz und einer Maschinenseite (bzw. mit einer maschinenseitigen Umrichterbrücke) zum Verbinden mit dem Phasenschieber gelöst. Der Umrichter ist geeigneterweise dazu eingerichtet, eine am Phasenschieber erzeugte Spannung in eine (frequentveränderte) Spannung umzuwandeln, die in das Wechselspannungsnetz eingespeist werden soll (u.U. mittels wenigstens eines Transformators). Zudem ist der Umrichter zweckmäßigerweise auch dazu eingerichtet, eine Spannung an dessen Netzseite in eine maschinenseitige Spannung umzuwandeln, um diese zur Speisung des Phasenschiebers einzusetzen. Der Umrichter ist jedenfalls geeigneterweise ein AC-AC-Umrichter bzw. ein Frequenzumrichter ("static frequency converter", SFC). Ein wesentlicher Vorteil der erfindungsgemäßen Anordnung ist die Möglichkeit, die Anordnung auch in Fällen eines starken Frequenzabfalls im Wechselspannungsnetz zu nutzen. Mittels des Umrichters kann nämlich die Energie des Phasenschiebers auch dann noch bspw. in das Wechselspannungsnetz eingespeist werden, wenn die Frequenz unterhalb der unteren Grenzfrequenz liegt.

Zweckmäßigerweise ist die Anordnung dazu eingerichtet, bei einem Erkennen eines vorbestimmten Frequenzabfalls im Wechselspannungsnetz den Phasenschieber mittels des Umrichters mit dem Wechselspannungsnetz zu verbinden und eine gespeicherte (Rotations-)Energie des Phasenschiebers als Wirkleistung in das Wechselspannungsnetz einzuspeisen. Zum Erkennen des Frequenzabfalls kann eine Detektionseinrichtung vorgesehen sein, die aufgrund gemessener Frequenzwerte im Wechselspannungsnetz den Frequenzabfall erkennen kann. Gemessene Frequenzwerte können dazu beispielsweise mit einer vorgegeben bzw. vorbestimmten Frequenzschwelle bzw. einer Grenzfrequenz verglichen werden. Sobald die Frequenzschwelle unterschritten wird, kann die Einspeisung der (Rotations-)Energie des Phasenschiebers als Wirkleistung eingeleitet werden. Bevorzugt ist zugleich ein Steuerungsverfahren bereitgestellt bzw. implementiert, die zugleich ein Abkoppeln der starren Netzverbindung des Phasenschiebers ermöglicht. Energie kann bis nahe dem Stillstand der Maschine ins Wechselspannungsnetz eingespeist werden. Einspeisbare Energie ist entsprechend des Auslegungspunktes des SFC festgelegt. Ein möglicher Energiebeitrag kann anhand einer bespielhaften Auslegung wie folgt geschätzt werden. Gespeicherte kinetische Energie: 4000 MWs; SFC-Leistung: 10 MW
Zeitdauer der abgebbaren Energie: 4000 MWs / 10 MW = 400 s. Nach Berücksichtigung der Verluste kann demnach von einer Zeitspanne von ca. 350 s ausgegangen werden, die der Phasenschieber als "Energiequelle" zur Verfügung stehen kann. Durch die erweiterte Funktion des Phasenschiebers muss die Anlage im Netzfehlerfall (niedrige Frequenz) nicht abgeworfen werden und ausdrehen, sondern gibt die gespeicherte verbleibende kinetische Energie vorteilhaft ins Netz ab, und zwar durch ein Umschalten auf SFC-Rückspeise-Betrieb, insbesondere bis zum annähernden Stillstand. Durch die vorgeschlagene technische Lösung ergibt sich ein Beitrag zur Reserve-Energie und damit ein weiter Netzstabilisierungsauftrag des Systems sowie ein zusätzliches Geschäftsmodel für Anlagenbetreiber.

Zweckmäßigerweise umfasst die Anordnung ferner eine Regelungseinrichtung, die dazu eingerichtet ist, zur Steuerung der Wirkleistungseinspeisung eine Frequenzregelung des Umrichters durchzuführen, wenn der Phasenschieber über den Umrichter mit dem Wechselspannungsnetz verbunden ist. Die Frequenzregelung kann mittels einer geeigneten Regelungseinrichtung durchgeführt werden.

Gemäß einer Ausführungsform der Erfindung umfasst der Phasenschieber eine Synchronmaschine. Beispielsweise kann die Anordnung einen horizontalen Synchrongenerator umfassen, der über einen Aufspanntransformator (Haupttransformator) mit dem Wechselspannungsnetz verbunden ist. Die Synchronmaschine bzw. der Synchrongenerator kann mit einem frequenzgeregelten Elektromotor (Ponymotor) oder einem Anlauffrequenzumrichter angefahren und gestoppt werden. Bei Erreichen der synchronen Betriebsdrehzahl wird der Synchrongenerator mit dem Wechselspannungsnetz synchronisiert. Die Synchronmaschine stellt dann im Motorbetrieb Blindleistung und Kurzschlussleistung für das Wechselspannungsnetz bereit.

Der Umrichter ist geeigneterweise ein netzgeführter Umrichter, bevorzugt ein thyristorbasierter Umrichter. Der thyristorbasierte Umrichter umfasst gleichspannungsseitig verbundene Thyristorbrücken, bspw. 6-Puls- oder 12-Puls-Brücken. Jede der Brücken umfasst Umrichterarme, die Einfachschaltungen oder Reihenschaltungen von Thyristoren aufweisen. Ein solcher Umrichter ist relativ robust und kostengünstig. Er kann geeigneterweise auf eine Betriebsspannung von bis zu bzw. mehr als 10 kV ausgelegt sein. Es ist allerdings auch denkbar, andere Umrichterarten einzusetzen. Beispielsweise sind auch selbstgeführte Umrichter, wie z.B. Matrixumrichter in der vorliegenden Anordnung einsetzbar.

Der Umrichter ist zweckmäßigerweise in einem Normalbetrieb der Anordnung nicht mit dem Phasenschieber verbunden, bzw. die Verbindung zwischen dem Phasenschieber und dem Umrichter ist im Normalbetrieb der Anordnung getrennt, z.B. mittels einer geeigneten Schalteinrichtung. Der Umrichter ist demnach gegenüber dem Phasenschieber zuschaltbar und wird in dem oben beschriebenen Fall des Frequenzabfalls zugeschaltet.

Vorzugsweise umfasst die Anordnung einen Haupttransformator, der netzseitig mit dem Wechselspannungsnetz verbindbar bzw. im Betrieb der Anordnung verbunden ist, und der sekundärseitig mit einer Schalteinrichtung und mittels Einschaltens der Schalteinrichtung mit dem Phasenschieber verbindbar ist, wobei der Haupttransformator ferner sekundärseitig mit der Netzseite des Umrichters verbindbar bzw. verbunden ist. Mittels des Haupttransformators kann die netzseitig erzeugte Spannung am Umrichter auf eine höhere Spannung, z.B. eine Spannung von mehr als 100 kV, bevorzugt mindestens 400 kV, transformiert werden.

Die Erfindung betrifft ferner ein Verfahren zum Stabilisieren eines Wechselspannungsnetzes, bei dem ein rotierender Phasenschieber bereitgestellt wird, der in einem Normalbetrieb eine Blindleistung mit dem Wechselspannungsnetz austauscht.

Die Aufgabe der Erfindung besteht darin, ein solches Verfahren anzugeben, dass möglichst effektiv ist.

Die Aufgabe wird bei einem artgemäßen Verfahren erfindungsgemäß dadurch gelöst, dass bei einem Erkennen eines vorbestimmten Frequenzabfalls im Wechselspannungsnetz der Phasenschieber mittels eines Umrichters mit dem Wechselspannungsnetz verbunden wird und mittels des Umrichters eine gespeicherte Energie des Phasenschiebers als Wirkleistung in das Wechselspannungsnetz eingespeist wird.

Die Vorteile des erfindungsgemäßen Verfahrens entsprechen insbesondere den Vorteilen, die im Zusammenhang mit der erfindungsgemäßen Anordnung beschrieben wurden.

Vorzugsweise wird bei dem zur Steuerung der Wirkleistungseinspeisung eine Frequenzregelung am Umrichter durchgeführt. Die Frequenzregelung kann mittels einer Regelungseinrichtung erfolgen. Bei der Frequenzregelung kann ein gemessener Frequenz-Istwert mit einem Frequenz-Sollwert (bspw. Nennfrequenz des Wechselspannungsnetzes) verglichen und eine entsprechende Frequenzdifferenz gebildet werden. Entsprechend der Frequenzdifferenz kann ein Umrichterstrom eingestellt werden.

Gemäß einer Ausführungsform der Erfindung wird beim Erkennen des Frequenzabfalls der Phasenschieber mittels Öffnens einer Schalteinrichtung (z.B. eines generatorseitigen Mittelspannungsschalters) vom Wechselspannungsnetz getrennt. Stattdessen wird mittels Schließens eines Eingangsschalters zwischen dem Phasenschieber und dem Umrichter der Phasenschieber über den Umrichter mit dem Wechselspannungsnetz verbunden. Die Handlungssequenz kann beispielsweise folgendermaßen verlaufen: Mittels einer geeigneten Netzzustandserfassungseinrichtung bzw. Frequenzdetektionseinrichtung wird eine Unterfrequenz im Wechselspannungsnetz festgestellt. Ein Mittelspannungsschalter zum Verbinden des Phasenschiebers mit dem Wechselspannungsnetz wird getrennt und der Phasenschieber bzw. eine Synchronmaschine des Phasenschiebers vom Wechselspannungsnetz abgekoppelt. Der Umrichter wird eingeschaltet, der Eingangsschalter eingeschaltet. Eine Erregung des Phasenschiebers wird hochgefahren. Eine Frequenzregelung des Umrichters wird gestartet.

Geeigneterweise wird eine netzseitig erzeugte Umrichterspannung mittels eines Haupttransformators, der zwischen dem Umrichter und dem Wechselspannungsnetz angeordnet ist, heraufgesetzt.

Im Falle einer Rückkehr der Nennfrequenz kann der Phasenschieber wieder hochgefahren werden (mit geregeltem SFC um bei schwachen Netzen das Netz nicht zusätzlich zu belasten). Bei sehr schwachen Netzen kann das Hochfahren eines Phasenschiebers ferner durch einen anderen, unterstützenden Phasenschieber gestützt werden (durch Regelung der Anfahrleistung).

Die Erfindung wird nachfolgend im Zusammenhang mit einem in den Figuren dargestellten Ausführungsbeispiel weiter erläutert.
Figur 1 zeigt ein Ausführungsbeispiel einer erfindungsgemäßen Anordnung in einer schematischen Darstellung;
Figur 2 zeigt ein schematisches Ablaufdiagramm eines Ausführungsbeispiels eines erfindungsgemäßen Verfahrens.

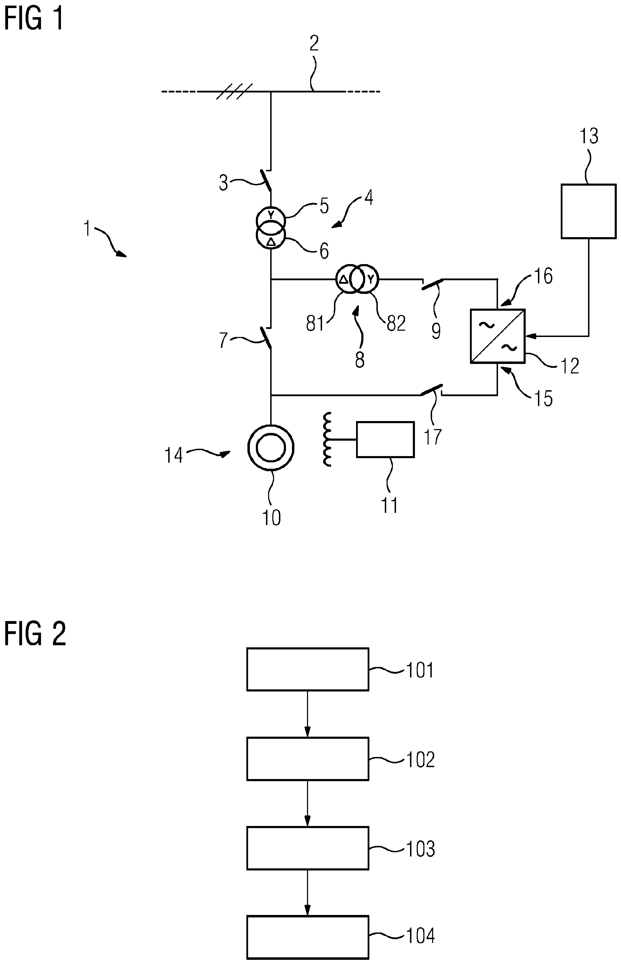

In Figur 1 ist eine Anordnung 1 zum Stabilisieren eines Wechselspannungsnetzes 2 dargestellt. Das Wechselspannungsnetz 2 ist ein dreiphasiges Verteilnetz mit einer Nennspannung von 400 kV und einer Nennfrequenz von 50 Hz. Die Anordnung 1 umfasst einen rotierenden Phasenschieber 14 mit einer Synchronmaschine 10 (Synchrongenerator) und einem Erregersystem 11. Der Phasenschieber 14 ist mittels einer generatorseitigen Schalteinrichtung 7 mit einer Sekundärseite 6 eines Haupttransformators 4 ("step up transformer") verbunden. Eine Primärseite 5 des Haupttransformators 4 ist mittels einer weiteren Schalteinrichtung 3 mit dem Wechselspannungsnetz 2 verbindbar.

Die Anordnung 1 umfasst ferner einen thyristorbasierten Umrichter 12 mit einer Maschinenseite 15 zum Verbinden mit dem Phasenschieber 14 sowie mit einer Netzseite 16 zum Verbinden mit dem Haupttransformator 4. Die Verbindung mit dem Haupttransformator 4 kann mittels eines weiteren Transformators 8 mit einer Primärwicklung 81 und Sekundärwicklung 82 und eines Leistungsschalters 9 erreicht werden. Der Umrichter 12 ist mittels eines Eingangsschalters 17 mit dem Phasenschieber 14 verbindbar.

Eine Steuer- und Regelungseinrichtung 13 ist zum Regeln (insbesondere einer Frequenzregelung) des Umrichters 12 eingerichtet.

Die Vorgehensweise beim Betrieb der Anordnung gemäß der Figur 1 ist in der Figur 2 dargestellt.

In einem ersten Schritt 101 wird der Phasenschieber 14 für den Normalbetrieb mit dem Wechselspannungsnetz 2 verbunden und es wird Blindleistung zwischen dem Phasenschieber 14 und dem Wechselspannungsnetz 2 ausgetauscht. Die Frequenz im Wechselspannungsnetz 2 wird überwacht.

Beim Erkennen eines Frequenzabfalls, also einer Frequenz im Wechselspannungsnetz 2, die unterhalb einer Frequenzschwelle liegt (bspw. unterhalb von 47 Hz), wird in einem zweiten Schritt 102 der Phasenschieber mittels Öffnens der Schalteinrichtung 7 vom Wechselspannungsnetz getrennt.

Stattdessen wird in einem dritten Schritt 103 mittels Schließens des Eingangsschalters 17 der Phasenschieber 14 über den Umrichter 12 mit dem Wechselspannungsnetz 2 verbunden. im Wechselspannungsnetz festgestellt.

In einem vierten Schritt 104 wird eine Frequenzregelung des Umrichters 12 gestartet und mit einer Einspeisung einer Restenergie des Phasenschiebers 14 als Wirkleistung in das Wechselspannungsnetz 2 begonnen.

## Patentansprüche

1. Anordnung (1) zum Stabilisieren eines Wechselspannungsnetzes (2) mit
- einem rotierenden Phasenschieber (14), der zum Austausch von Blindleistung mit dem Wechselspannungsnetz (2) eingerichtet ist,
**gekennzeichnet durch**
- einen Umrichter (12) mit einer Netzseite (16) zum Verbinden mit dem Wechselspannungsnetz (2) und einer Maschinenseite (15) zum Verbinden mit dem Phasenschieber (14).

2. Anordnung (1) nach Anspruch 1, wobei die Anordnung (1) dazu eingerichtet ist, bei einem Erkennen eines vorbestimmten Frequenzabfalls im Wechselspannungsnetz (2) den Phasenschieber (14) mittels des Umrichters (12) mit dem Wechselspannungsnetz (2) zu verbinden und eine gespeicherte Energie des Phasenschiebers (14) als Wirkleistung in das Wechselspannungsnetz (2) einzuspeisen.

3. Anordnung (1) nach einem der vorangehenden Ansprüche, wobei die Anordnung (1) ferner eine Regelungseinrichtung (13) umfasst, die dazu eingerichtet ist, zur Steuerung der Wirkleistungseinspeisung eine Frequenzregelung des Umrichters (12) durchzuführen, wenn der Phasenschieber (14) über den Umrichter (12) mit dem Wechselspannungsnetz (2) verbunden ist.

4. Anordnung nach einem der vorangehenden Ansprüche, wobei der Phasenschieber (14) eine Synchronmaschine umfasst.

5. Anordnung (1) nach einem der vorangehenden Ansprüche, wobei der Umrichter (12) ein netzgeführter Umrichter, bevorzugt ein thyristorbasierter Umrichter ist.

6. Anordnung (1) nach einem der vorangehenden Ansprüche, wobei die Anordnung (1) einen Haupttransformator (4) umfasst, der netzseitig mit dem Wechselspannungsnetz (2) verbindbar bzw. im Betrieb der Anordnung (1) verbunden ist, und der sekundärseitig mit einer Schalteinrichtung (7) und mittels Einschaltens der Schalteinrichtung (7) mit dem Phasenschieber (14) verbindbar ist, wobei der Haupttransformator (4) ferner sekundärseitig mit der Netzseite (16) des Umrichters (12) verbindbar bzw. verbunden ist.

7. Verfahren zum Stabilisieren eines Wechselspannungsnetzes (2), bei dem
- ein rotierender Phasenschieber (14) bereitgestellt wird, der in einem Normalbetrieb eine Blindleistung mit dem Wechselspannungsnetz (2) austauscht,
- bei einem Erkennen eines vorbestimmten Frequenzabfalls im Wechselspannungsnetz (2) der Phasenschieber (14) mittels eines Umrichters (12) mit dem Wechselspannungsnetz (2) verbunden wird und
- eine gespeicherte Energie des Phasenschiebers (14) als Wirkleistung in das Wechselspannungsnetz (2) eingespeist wird.

8. Verfahren nach Anspruch 7, bei dem zur Steuerung der Wirkleistungseinspeisung eine Frequenzregelung am Umrichter (12) durchgeführt wird.

9. Verfahren nach Anspruch 7 oder 8, bei dem beim Erkennen des Frequenzabfalls der Phasenschieber (14) mittels Öffnens einer Schalteinrichtung (3,7) vom Wechselspannungsnetz getrennt wird und stattdessen mittels Schließens eines Eingangsschalters (17) zwischen dem Phasenschieber (14) und dem Umrichter der Phasenschieber (14) über den Umrichter (12) mit dem Wechselspannungsnetz (2) verbunden wird.

10. Verfahren nach Anspruch 7 bis 9, bei dem eine netzseitig erzeugte Umrichterspannung mittels eines Haupttransformators (4), der zwischen dem Umrichter (12) und dem Wechselspannungsnetz (2) angeordnet ist, heraufgesetzt wird.
